# EUROPEAN PATENT APPLICATION

(11) **EP 4 683 052 A2**
(43) Date of publication of application: **21.01.2026**
(21) Application number: 25186851.9
(22) Date of filing: 02.07.2025
(51) Int. Cl.: H01M 50/103, H01M 50/15, H01M 50/176, H01M 50/534, H01M 50/536, H01M 50/55, H01M 50/566

(54) **SECONDARY BATTERY**

(30) Priority: 16.07.2024 CN 202421683544 U
(71) Applicant: AESC Japan Ltd., Yokohama-Shi, Kanagawa 220-0012 (JP)
(72) Inventor: ZHU, Jianfeng, Jiangyin City, Wuxi City, 214443 (CN); LUO, Junrui, Jiangyin City, Wuxi City, 214443 (CN); LI, Qiankun, Jiangyin City, Wuxi City, 214443 (CN)
(74) Representative: Becker, Eberhard

(57) **Abstract**

A secondary battery (100) including an electrode assembly (110) and a top cover assembly (150) is provided. The electrode assembly (110) has a first tab (112). The top cover assembly (150) includes a top cover plate (151) and a terminal post (152). The terminal post (152) includes a bottom plate (152A) disposed on a side of the top cover plate (151) facing the electrode assembly (110), wherein the first tab (112) is directly connected to the bottom plate (152A).

## Description

### BACKGROUND

### Technical Field

The present disclosure relates to the field of battery technology, and more specifically relates to a secondary battery.

### Description of Related Art

As scientific and technological advancements progress, secondary batteries have gained widespread utilization in portable electronic devices such as mobile phones, digital cameras, and laptop computers, and furthermore possess extensive application prospects in medium to large-scale electric equipment including electric vehicles, electric bicycles, and energy storage facilities, thereby constituting a significant technological means for addressing issues pertaining to energy crises and environmental pollution.

With the development of secondary battery technology, there is an increasing demand for higher energy density in battery cells.

### SUMMARY

In view of the problems in the related technology, the present disclosure provides a secondary battery, which may at least improve battery energy density and save manufacturing costs.

The technical solution of the present disclosure is implemented as follows:

According to one aspect of the present disclosure, a secondary battery is provided. The secondary battery includes an electrode assembly and a top cover assembly. The electrode assembly has a first tab. The top cover assembly includes a top cover plate and a terminal post. The terminal post includes a bottom plate disposed on a side of the top cover plate facing the electrode assembly, wherein the first tab is directly connected to the bottom plate.

In some embodiments, the terminal post further includes an upper metal portion, the upper metal portion extends from one side of the top cover plate facing away from the electrode assembly, passes through an opening of the top cover plate and is connected to the bottom plate.

In some embodiments, the first tab is directly connected to the bottom plate through ultrasonic welding.

In some embodiments, the first tab is directly connected to the bottom plate through torque welding.

In some embodiments, the first tab is directly connected to the bottom plate at a connection position, wherein, the length direction of the connection position is parallel to the length direction of the top cover assembly.

In some embodiments, the material of the first tab is aluminium.

In some embodiments, the top cover assembly further includes an insulation sealing assembly, the insulation sealing assembly passes through the opening, and isolates the bottom plate and the upper metal portion from the top cover plate.

In some embodiments, the terminal post is a first terminal post. The top cover assembly further includes a second terminal post. The electrode assembly further has a second tab. The second tab and the first tab are located at the same end surface of the electrode assembly, wherein, the second terminal post includes a bottom plate disposed on one side of the top cover plate facing the electrode assembly, and the second tab is directly connected to the bottom plate of the second terminal post.

In some embodiments, the electrode assembly is a first electrode assembly. The secondary battery further includes: a second electrode assembly, the second electrode assembly has a first tab and a second tab; wherein, the first tab and the second tab of the second electrode assembly are directly connected to the bottom plate of the first terminal post and the bottom plate of the second terminal post, respectively.

In some embodiments, the secondary battery is a prismatic-housing battery.

The embodiments of the present disclosure, by directly connecting the tab to the bottom plate of the terminal post, thereby eliminating the use of existing connecting pieces, may reduce the weight of the battery. Moreover, because the use of connecting pieces is omitted, the height of the electrode assembly occupied by the connecting pieces in the thickness direction may be released, maximizing the use of inner space of the housing. The saved inner space of the housing may be used to increase the size of the electrode assembly, thus improving energy density. In the meantime, because the connecting pieces are omitted, a process of welding the electrode assembly to the connecting pieces may be omitted, thus saving manufacturing costs.

### BRIEF DESCRIPTION OF THE DRAWINGS

In order to explain the technical solutions in the embodiments of the present disclosure or in the related art more clearly, a brief introduction will be given below to the drawings needed to be used in the embodiments. Clearly, the drawings described below are only some embodiments of the present disclosure. For those skilled in the art, other drawings may be obtained based on these drawings without creative labor.
FIG. 1 is a top view of a top cover assembly and an electrode assembly in a secondary battery according to an embodiment of the present disclosure.
FIG. 2 is a sectional diagram of a terminal post in the top cover assembly according to an embodiment of the present disclosure.
FIG. 3A is a schematic diagram of the shape of a welding head base of an ultrasonic welding machine that may be used for welding tabs according to an embodiment of the present disclosure.
FIG. 3B is a schematic diagram of the shape of a torque welding needle that may be used for welding tabs according to an embodiment of the present disclosure.

### DESCRIPTION OF THE EMBODIMENTS

The technical solutions in the embodiments of the present disclosure will be clearly and completely described below in conjunction with the drawings in the embodiments of the present disclosure. Clearly, the described embodiments are only a part of the embodiments of the present disclosure, not all embodiments. Based on the embodiments in the present disclosure, all other embodiments obtained by those skilled in the art are within the scope to be protected by the present disclosure.

Currently, secondary batteries (such as prismatic-aluminium-housing batteries) generally adopt connecting pieces as bridges or intermediaries for connecting the electrode assembly (also known as bare battery cell) with the top cover or housing. The electrode assembly needs to be connected to the top cover or housing through the connecting piece. However, the connecting piece itself has a thickness, which will occupy the size of the electrode assembly inside the secondary battery, limiting the improvement of battery energy density.

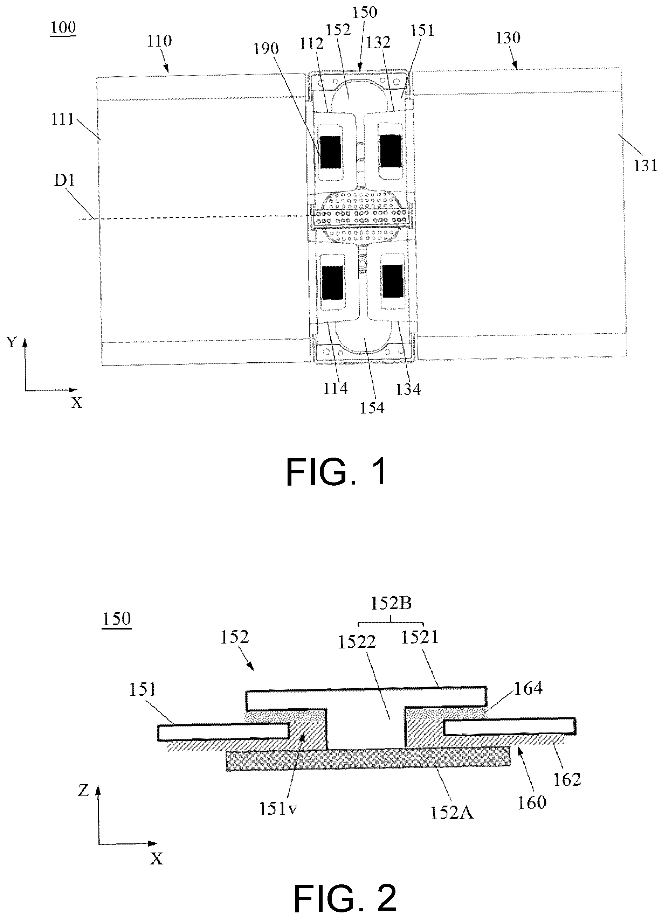

An embodiment of the present disclosure provides a secondary battery. Referring to FIG. 1, the secondary battery 100 may include a first electrode assembly 110. The first electrode assembly 110 may include a main body 111, a first tab 112 and a second tab 114. The main body 111 may be formed by stacking or winding a first electrode sheet (such as a positive electrode sheet), a second electrode sheet (such as a negative electrode sheet), and a separator located between the first electrode sheet and the second electrode sheet. The separator serves as an insulator between the first electrode sheet and the second electrode sheet. The first tab 112 and the second tab 114 may be formed from foil material (also known as current collector) of the first electrode sheet and the second electrode sheet that is not coated with active substance. In some embodiments, the first tab 112 and the second tab 114 each include multiple layers of foil material.

In this embodiment, the secondary battery 100 is a prismatic-housing battery. The main body 111 is overall a flat rectangular structure. The main body 111 may have an axial direction D1, and the main body 111 may be formed by winding the first electrode sheet, the second electrode sheet, and the separator around the axial direction D1. The axial direction D1 of the main body 111 may be its height direction. The main body 111 has two end surfaces opposite to each other along the axial direction D1. The second tab 114 and the first tab 112 are both located at the same end surface of the first electrode assembly 110. The secondary battery 100 may also include a second electrode assembly 130. Similar to the first electrode assembly 110, the second electrode assembly 130 has a main body 131, a first tab 132 and a second tab 134 located at the same end surface of the main body 131. In this embodiment, for illustration purposes, the first tabs 112 and 132 of the first electrode assembly 110 and the second electrode assembly 130 are described as positive tabs, and the second tabs 114 and 134 of the first electrode assembly 110 and the second electrode assembly 130 are described as negative tabs.

In addition, the secondary battery 100 may also include a top cover assembly 150. The top cover assembly 150 may include a top cover plate 151, a first terminal post 152 and a second terminal post 154. The first tab 112 and the second tab 114 of the first electrode assembly 110 are located at the end surface of the first electrode assembly 110 adjacent to the top cover assembly 150. The first tab 132 and the second tab 134 of the second electrode assembly 130 are located at the end surface of the second electrode assembly 130 adjacent to the top cover assembly 150. It should be understood that the first electrode assembly 110 and the second electrode assembly 130 may be accommodated in a housing (not shown), and the top cover assembly 150 may be used to seal the opening of the housing.

In some embodiments, at least one tab of at least one electrode assembly is connected to the corresponding terminal post using the method described in the present disclosure. In the embodiment of FIG. 1, the first tab 112 and the second tab 114 of the first electrode assembly 110, and the first tab 132 and the second tab 134 of the second electrode assembly 130 may all be connected to the corresponding first terminal post 152 and second terminal post 154 using the method described in the present disclosure. The structures of the first terminal post 152 and the second terminal post 154 may be similar or identical. The following mainly explains the embodiments of the present disclosure through the structure of the first terminal post 152, and the connection between the first tab 112 of the first electrode assembly 110 and the first terminal post 152.

FIG. 2 is a sectional diagram of the first terminal post 152 in the top cover assembly 150 according to an embodiment of the present disclosure. The directions X, Y, and Z in FIG. 1 and FIG. 2 are perpendicular to each other. Referring to FIG. 2, the top cover assembly 150 may include a top cover plate 151 and a first terminal post 152. The first terminal post 152 may include a bottom plate 152A arranged on one side of the top cover plate 151 facing the first electrode assembly 110 (see FIG. 1).

Combining FIG. 1 and FIG. 2, the first tab 112 of the first electrode assembly 110 may be directly connected to the bottom plate 152A of the first terminal post 152. By directly connecting the first tab 112 to the bottom plate 152A of the first terminal post 152, the use of existing connecting pieces is omitted, thereby reducing the battery weight. Furthermore, because the use of connecting pieces is omitted, the height of the electrode assembly occupied by the connecting pieces in the thickness direction may be released, thus maximizing the use of the inner space of the housing, and the saved inner space of the housing may be used to increase the size of the electrode assembly, thus improving the energy density. In the meantime, because the connecting pieces are omitted, a process of welding the electrode assembly to the connecting pieces may be omitted, thus saving manufacturing cost. The thickness of connecting pieces commonly and currently used in the market is typically 0.5mm to 3mm. If calculated with a connecting piece with a thickness of 1mm and an electrode assembly with a height of 100mm, by omitting the connecting piece, the energy density of the electrode assembly may be improved by 1%.

In some embodiments, the first tab 112 is directly connected to the bottom plate 152A of the first terminal post 152 at the connection position 190. The bottom plate 152A of the first terminal post 152 may be overlapped with and directly connected to the first tab 112 in the region of the connection position 190. The connection position 190 may have a rectangular shape in top view. The length direction (Y direction) of the connection position 190 is parallel to the length direction of the top cover assembly 150.

Specifically, the first terminal post 152 may also include an upper metal portion 152B. The upper metal portion 152B extends from one side of the top cover plate 151 facing away from the first electrode assembly 110 (see FIG. 1), passes through the opening 151v of the top cover plate 151 and is connected to the bottom plate 152A. In the vertical direction Z passing through the opening 151v, the projection of the bottom plate 152A may completely cover the opening 151v, that is, the size of the bottom plate 152A is larger than the size of the opening 151v.

The upper metal portion 152B may include a first metal portion 1521 and a second metal portion 1522 connected between the first metal portion 1521 and the bottom plate 152A. The size of the first metal portion 1521 is also larger than the size of the opening 151v, the size of the second metal portion 1522 is smaller than the opening 151v, and the second metal portion 1522 passes through the opening 151v, so that the upper metal portion 152B may have a T-shaped section structure. In some embodiments, the material of the bottom plate 152A of the first terminal post 152 may be pure aluminum, pure copper, nickel-plated copper, alloy, and so on. The thickness of the bottom plate 152A may be in the range of 0.5mm to 3mm. In some embodiments, the upper metal portion 152B and the bottom plate 152A may be connected to form an integral as a whole through riveting, stamping, machining, integral friction welding, and so on, and pass through the opening 151v of the top cover plate 151, thus achieving internal and external electrical connection.

In addition, the top cover assembly 150 may also include an insulation sealing assembly 160. The insulation sealing assembly 160 passes through the opening 151v, and isolates the bottom plate 152A and the upper metal portion 152B from the top cover plate 151. Specifically, the insulation sealing assembly 160 may include an insulation member 162 and a sealing ring 164 on the insulation member 162. The insulation member 162 may be, for example, insulating plastic.

In order to achieve direct connection between the first tab 112 and the bottom plate 152A, welding method may be adopted. One existing technology is to use ultrasonic welding process to weld the originally loose foil material for tab of the electrode assembly into an integral as a whole, and then use laser welding process to weld the tab to the top cover or housing. However, in the condition where the existing laser welding process is adopted to weld the tab to the top cover or housing, since laser welding will cause the tab at the welding part to reach the melting point and then melt, the tab will experience liquid-solid state changes, which will lead to foil material breakage due to thermal expansion and contraction of the material.

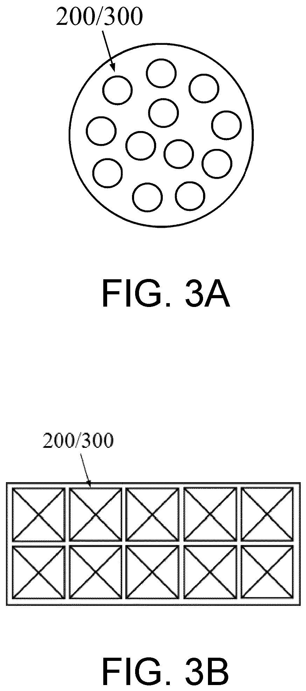

According to some embodiments of this application, the first tab 112 may be directly connected to the bottom plate 152A through ultrasonic welding. In some embodiments, the power range of the ultrasonic welding machine used may be 3000W to 9000W. In some embodiments, the parameters of the ultrasonic welding used may be: energy 200J to 800J, amplitude 20% to 70%, air pressure 0.1MPa to 0.6MPa, and welding time 0.2s to 0.7s. The shape of the welding head base 200 of the ultrasonic welding machine that may be used may be spherical (as shown in FIG. 3A). In some embodiments, the shape of the welding head base 200 of the ultrasonic welding machine may also be rhombic (for example, as shown in FIG. 3B, shown as a square in FIG. 3B). It should be understood that the above power range, parameters, and shape of welding head base for ultrasonic welding are only exemplary.

According to other embodiments of the present disclosure, the first tab 112 may be directly connected to the bottom plate 152A through torque welding. In some embodiments, the power range of the torque welding machine used is 1200W to 9000W. In some embodiments, the parameters of the torque welding used are: energy 200J to 800J, torque 20% to 70%, air pressure 0.1MPa to 0.6MPa, and welding time 0.2s to 0.7s. The shape of the torque welding needle 300 of the torque welding machine that may be used may be spherical (as shown in FIG. 3A). In some embodiments, the shape of the torque welding needle 300 may also be rhombic (for example, as shown in FIG. 3B, shown as a square in FIG. 3B). It should be understood that the above power range, parameters, and shape of welding head base for torque welding are only exemplary.

Still referring to FIG. 1 and FIG. 2, by using ultrasonic welding or torque welding method to weld the first electrode assembly 110 with the bottom plate 152A of the first terminal post 152 together, it is possible to omit the laser welding process, and to prevent from reaching the melting point of the tab material and causing the tab to melt, and thus will not lead to tab breakage due to the transformation between liquid and solid states. Moreover, the connection strength of ultrasonic welding or torque welding may also be ensured, thus ensuring a stable connection between the electrode assembly and the bottom plate 152A of the terminal post.

In embodiments where the first tab 112 is a positive tab, the material of the first tab 112 may be aluminum. In such embodiments, the material of the second tab 114, which is a negative tab, may be copper. In some embodiments, the number of layers of the foil material for the positive tab and negative tab may be 20 to 100 layers respectively. The thickness of the foil material (aluminum foil) for a single layer of the positive tab is 10µm to 15µm/per layer, and the thickness of the foil material (copper foil) for a single layer of the negative tab is 4µm to 8µm/per layer.

As mentioned above, if the existing laser welding process is adopted to weld the tab to the top cover or housing, laser welding will cause the welding part to reach the melting point and form a molten pool. Moreover, since the aluminum used for the positive tab has a relatively large expansion coefficient, during the melting and solidification process of the molten pool, when the aluminum material undergoes liquid-solid state changes, the material expands and contracts, and the volume change may lead to foil material breakage. By using ultrasonic welding or torque welding method to weld the first electrode assembly 110 with the bottom plate 152A of the first terminal post 152 together, the aluminum material will not reach the melting point, the tab will not melt, and therefore tab breakage will not occur due to the transformation between liquid and solid states.

In addition, since the top cover assembly 150 also needs the insulation sealing assembly 160 to isolate the bottom plate 152A and the upper metal portion 152B from the top cover plate 151, if laser welding process is adopted for welding, due to the relatively high heat generated by laser welding, it is likely to cause the insulation member 162 used for insulation in the insulation sealing assembly 160 as well as the sealing ring 164 that serves as a seal inside the first terminal post 152 to melt, which may affect the insulation and sealing effects. By adopting ultrasonic welding or torque welding method to weld the first tab 112 with the bottom plate 152A of the first terminal post 152 together, the temperature of the welding process is reduced, which may prevent the insulation member 162 and the sealing ring 164 from melting, thus preventing the deterioration of insulation effect and sealing effect.

## Claims

1. A secondary battery (100), comprising:
an electrode assembly (110) having a first tab (112); and
a top cover assembly (150) comprising a top cover plate (151) and a terminal post (152), wherein the secondary battery (100) is **characterised in that** the terminal post (152) comprises a bottom plate (152A) located on one side of the top cover plate (151) facing the electrode assembly (110), and the first tab (112) is directly connected to the bottom plate (152A).

2. The secondary battery (100) according to claim 1, wherein the terminal post (152) further comprises an upper metal portion (152B), the upper metal portion (152B) extends from one side of the top cover plate (151) facing away from the electrode assembly (110), passes through an opening (151v) of the top cover plate (151) and is connected to the bottom plate (152A).

3. The secondary battery (100) according to claim 1, wherein the first tab (112) is directly connected to the bottom plate (152A) through ultrasonic welding.

4. The secondary battery (100) according to claim 1, wherein the first tab (112) is directly connected to the bottom plate (152A) through torque welding.

5. The secondary battery (100) according to claim 1, wherein the first tab (112) is directly connected to the bottom plate (152A) at a connection position (190), wherein a length direction of the connection position (190) is parallel to a length direction of the top cover assembly (150).

6. The secondary battery (100) according to claim 1, wherein a material of the first tab (112) is aluminium.

7. The secondary battery (100) according to claim 2, wherein the top cover assembly (150) further comprises an insulation sealing assembly (160), which passes through the opening (151v), and isolates the bottom plate (152A) and the upper metal portion (152B) from the top cover plate (151).

8. The secondary battery (100) according to claim 1, wherein the terminal post (152) is a first terminal post (152), the top cover assembly (150) further comprises a second terminal post (154), the electrode assembly (110) further has a second tab (114), the second tab (114) and the first tab (112) are located at a same end surface of the electrode assembly (110),
wherein the second terminal post (154) comprises a bottom plate disposed on one side of the top cover plate (151) facing the electrode assembly (110), and the second tab (114) is directly connected to the bottom plate of the second terminal post (154).

9. The secondary battery (100) according to claim 8, wherein the electrode assembly (110) is a first electrode assembly (110), and the secondary battery (100) further comprises:
a second electrode assembly (130) having a first tab (132) and a second tab (134);
wherein the first tab (132) and the second tab (134) of the second electrode assembly (130) are directly connected to the bottom plate (152A) of the first terminal post (152) and the bottom plate of the second terminal post (154), respectively.

10. The secondary battery (100) according to any one of claims 1-9, wherein the secondary battery (100) is a prismatic-housing battery.
